(19) Europäisches Patentamt
European Patent Office
Office européen des brevets

(11) **EP 3 416 315 B1**

(12) **FASCICULE DE BREVET EUROPEEN**

(45) Date de publication et mention de la délivrance du brevet:
**19.04.2023 Bulletin 2023/16**

(21) Numéro de dépôt: **18177173.4**

(22) Date de dépôt: **12.06.2018**

(51) Classification Internationale des Brevets (IPC):
**H04J 3/06** *(2006.01)*    **H04Q 9/00** *(2006.01)*
**H04W 56/00** *(2009.01)*    H04W 74/04 *(2009.01)*
H04B 7/26 *(2006.01)*    H04W 84/18 *(2009.01)*

(52) Classification Coopérative des Brevets (CPC):
**H04W 56/0045; H04Q 9/00; H04W 56/00;**
H04J 3/0652; H04Q 2209/10; H04Q 2209/40;
H04Q 2209/43; H04Q 2209/82; H04W 74/04

(54) **PROCÉDÉ DE COMMUNICATION RADIO DANS UN SYSTÈME COMPORTANT UNE PLURALITÉ DE MODULES COMMUNICANTS**

FUNKKOMMUNIKATIONSVERFAHREN IN EINEM SYSTEM, DAS EINE VIELZAHL VON KOMMUNIZIERENDEN MODULEN UMFASST

METHOD OF RADIO COMMUNICATION IN A SYSTEM COMPRISING A PLURALITY OF COMMUNICATING MODULES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2017 FR 1755280**

(43) Date de publication de la demande:
**19.12.2018 Bulletin 2018/51**

(73) Titulaire: **Schneider Electric Industries SAS 92500 Rueil-Malmaison (FR)**

(72) Inventeurs:
• **HENNEQUIN, Michel**
  **38050 Grenoble Cedex 09 (FR)**
• **DREINA, Emmanuel**
  **38050 Grenoble Cedex 09 (FR)**
• **COCHARD, Nicolas**
  **38050 Grenoble Cedex 09 (FR)**

(74) Mandataire: **Lavoix**
  **62, rue de Bonnel**
  **69448 Lyon Cedex 03 (FR)**

(56) Documents cités:
US-A- 5 654 968    US-A1- 2008 075 005
US-A1- 2011 087 396    US-A1- 2013 049 939
US-A1- 2014 105 205

• **"IEEE Standard for Low-Frequency (less than 500 kHz) Narrowband Power Line Communications for Smart Grid Applications;IEEE Std 1901.2-2013", IEEE STANDARD, IEEE, PISCATAWAY, NJ, USA, 6 décembre 2013 (2013-12-06), pages 1-269, XP068055829, ISBN: 978-0-7381-8793-8**

## Description

La présente invention concerne un procédé de communication radio dans un système comportant une pluralité de modules communicants, et un système de communication radio associé.

L'invention se situe dans le domaine de la communication sans fil effectuée par des modules communicants, notamment dans des installations électriques, les modules communicants étant par exemple des modules de mesure d'une ou plusieurs grandeurs physiques de l'installation électrique.

Il existe des protocoles de communication radio de courte distance, par exemple Bluetooth (marque déposée) et ZigBee, adaptés pour des réseaux domestiques.

Divers modules communicants, par exemple des capteurs de mesures électriques, de température ou de pression, mettent en oeuvre le protocole ZigBee basé sur le protocole de communication IEEE 802.15.4. Le protocole ZigBee présente l'avantage de réduire la consommation électrique au strict minimum, tout en permettant un débit de transmission de données faible mais suffisant pour la transmission de données de mesure et de commande d'équipements.

Le protocole ZigBee Green Power a pour objectif de permettre les communications entre des modules à consommation d'électricité encore plus réduite.

Par exemple, on considère un système de surveillance et de gestion d'installations électriques, comportant une pluralité de modules communicants, par exemple selon le protocole ZigBee Green Power, adaptés chacun à communiquer de manière bidirectionnelle avec un dispositif concentrateur, qui reçoit la totalité des informations de mesure transmises par les divers modules et est adapté à les agréger pour une utilisation ultérieure. Du point des vue des communications, chaque module communicant est un noeud d'un réseau en étoile, centré autour du dispositif concentrateur.

Dans un tel réseau de communications, un des problèmes qui se pose est d'assurer que chacun des noeuds de communication peut émettre des trames ou messages radio, sans interférence ou collision avec une ou plusieurs autres trames radio émises par d'autres noeuds, afin d'assurer une qualité de service suffisante.

Une méthode de communication connue sous le nom de TDMA (pour « Time Division Multiple Access ») consiste à allouer à chaque noeud un intervalle temporel d'émission, répété périodiquement.

Chaque module communicant formant un noeud du réseau de communication possède une horloge interne, à quartz ou formée par un oscillateur RC, et utilise cette horloge interne pour cadencer les émissions de messages.

Cependant, il y a un risque de dérive temporelle induisant d'éventuelles superpositions temporelles des intervalles d'émission associés à des noeuds de communication distincts. Une telle superposition induit un risque de collision, et par conséquent de perte d'un ou plusieurs messages.

De plus, une telle méthode nécessite une intervention spécifique pour le séquencement des intervalles temporels lors d'une mise en service d'une pluralité de modules communicants.

Les documents US 2013/049939 A1 et US 2011/087396 A1 décrivent un système de transmission de données d'une pluralité de capteurs communicants.

Le standard « IEEE Standard for Low-Frequency (less than 500kHz) Narrowband Power Line Communications for Smart Grid Applications », 1901-2-2013 décrit une technologie de communication par courants porteurs en ligne.

Un protocole classique, le protocole Aloha, permettant d'assurer une bonne qualité de service, consiste à effectuer la transmission par le noeud récepteur d'un message d'acquittement (ou ACK pour « acknowledgement » en anglais), et, en cas de non réception d'un message d'acquittement, le noeud émetteur attend un temps aléatoire avant de ré-émettre le message initial.

D'une part, lorsque les noeuds émetteurs sont des modules de mesure communicants, tels des capteurs, ils ne possèdent pas assez d'énergie pour rester en réception permanente ou prolongée, donc les périodes d'écoute en réception sont réduites.

D'autre part, d'une manière plus générale, à cause de la sélection d'un temps d'attente aléatoire, le risque de collision est augmenté, donc le système de communications est instable. De plus, le temps nécessaire pour que chaque noeud trouve un intervalle temporel d'émission approprié peut être très long, et n'a pas de limite supérieure garantie. En d'autres termes, le temps de convergence du système peut s'avérer long.

L'invention, telle que revendiquée, a pour objectif de remédier aux inconvénients de l'état de la technique, pour améliorer la qualité de service dans un système de communications comprenant une pluralité de modules communicants.

A cet effet, l'invention propose, selon un aspect, un procédé de communication radio dans un système comportant une pluralité de modules communicants selon la revendication 1.

Avantageusement, le procédé de l'invention, telle que revendiquée, permet, grâce à l'utilisation d'un compteur dans chaque module communicant, de réduire l'instabilité et d'obtenir une convergence plus rapide.

Le procédé de communication radio selon l'invention peut également présenter une ou plusieurs des caractéristiques des revendications dépendantes 2 à 7.

Selon un autre aspect, l'invention concerne un système de communication radio comportant une pluralité de modules communicants et un dispositif concentrateur selon la revendication 9.

Le système de communication radio selon l'invention peut également présenter une ou plusieurs des caractéristiques des revendications 10 à 13, prises indépendamment ou selon toutes combinaisons techniquement acceptables.

Selon un autre aspect, l'invention concerne un programme d'ordinateur selon la revendication 8.

D'autres caractéristiques et avantages de l'invention, telle que revendiquée, ressortiront de la description qui en est donnée ci-dessous, à titre indicatif et nullement limitatif, en référence aux figures annexées, parmi lesquelles :

- la figure 1 représente schématiquement un système de communication en étoile dans lequel le procédé de communication radio selon l'invention trouve une application ;
- la figure 2 illustre schématiquement une allocation régulière périodique d'intervalles temporels de communication ;
- la figure 3 illustre schématiquement une collision d'intervalles temporels de communication ;
- la figure 4 est un synoptique des principales étapes d'un procédé de communication mis en oeuvre par un module communicant selon un mode de réalisation ;
- la figure 5 illustre schématiquement un module communicant selon un mode de réalisation ;
- la figure 6 illustre schématiquement les principales étapes de la synchronisation de modules communicants selon un mode de réalisation ;
- la figure 7 illustre schématiquement l'évolution dans le temps de variables en fonction d'une tension alternative.

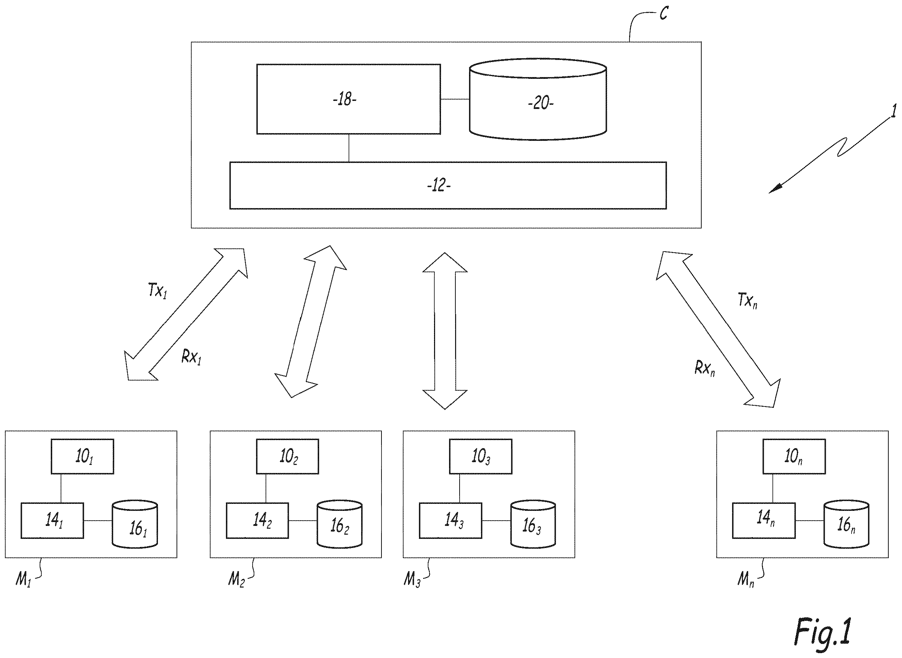

La figure 1 illustre schématiquement un système de communications mettant en oeuvre un procédé de communication selon l'invention.

Dans ce système 1, une pluralité de modules communicants, $M_1$ à $M_n$ sont aptes à communiquer par un protocole de communication sans fil avec un dispositif concentrateur C.

Par exemple, chacun des modules communicants est un module de mesure adapté à mesurer des grandeurs électriques d'une installation électrique, par exemple le courant, la tension, et à transmettre des trames de communication, formatées selon un protocole de communication donné, et encapsulant des valeurs mesurées.

En variante, d'autres types de modules communicants sont présents dans le système 1, par exemple capteurs de courant, d'énergie, de température, d'humidité. Bien entendu, la liste ci-dessus est non exhaustive.

Dans un mode de réalisation, le protocole de communication est le protocole ZigBee Green Power.

Chacun des modules communicants $M_1$ à $M_n$ est alimenté électriquement, soit par un câble d'alimentation électrique véhiculant de l'énergie électrique fournie par un réseau de fourniture d'énergie électrique, monophasé ou triphasé, soit par une source d'énergie électrique autonome, par exemple un pile par module communicant.

La source d'alimentation électrique respective de chaque module communicant n'est pas illustrée à la figure 1.

Le nombre total n de modules communicants du système 1 est quelconque, par exemple égal à 20.

Le dispositif concentrateur C est de préférence branché pour être alimenté par le réseau de fourniture d'énergie électrique (non illustré sur la figure 1).

Chacun des modules $M_1$ à $M_n$ comporte une unité d'émission/réception radio 10, à $10_n$, adaptée à émettre des messages Tx à destination du dispositif concentrateur C, et à recevoir des messages Rx en provenance du dispositif concentrateur C.

Les messages transmis et reçus sont formatés selon le protocole de communication choisi.

Le dispositif concentrateur C comporte une unité d'émission/réception 12, adaptée à communiquer selon le protocole de communication choisi avec chacune des unités d'émission/réception de chacun des modules $M_1$ à $M_n$.

D'un point de vue des communications, le système 1 fonctionne selon une architecture de réseau en étoile, ayant pour noeud de communication central le dispositif concentrateur C, chacun des modules communicants formant un noeud de communication du réseau de communications en étoile.

Chacun des modules $M_1$ à $M_n$ comporte également une unité de calcul $14_1$ à $14_n$, par exemple un processeur, et une unité de stockage de données $16_1$ à $16_n$. Les unités de calcul $14_i$ et de stockage 16 sont aptes à coopérer pour mettre en oeuvre un programme d'ordinateur comportant des instructions de code de programme permettant d'exécuter des étapes du procédé de communication selon l'invention. Ainsi, chaque module communicant est un dispositif programmable adapté à mettre en oeuvre des instructions de code de programme.

Le dispositif concentrateur C comporte aussi une unité de calcul 18, par exemple un processeur, et une unité de stockage de données 20. Les unités de calcul 18 et de stockage 20 sont aptes à coopérer pour mettre en oeuvre des instructions de code de programme permettant d'exécuter des étapes selon un mode de réalisation du procédé de communication selon l'invention.

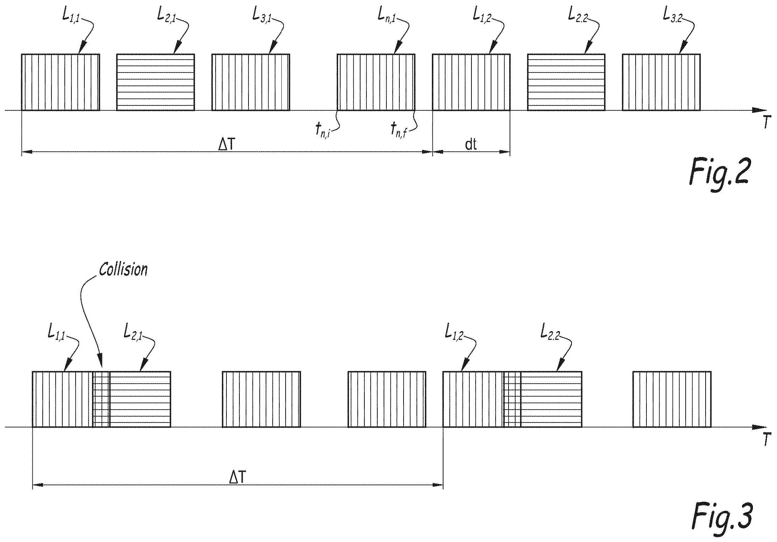

La figure 2 illustre schématiquement le principe de réservation d'intervalles temporels de communication par module communicant, sur un axe temporel, tel qu'il est connu.

Pendant chaque période de durée $\Delta T$, on alloue à chaque module communicant $M_1$ à $M_n$ un intervalle de communication de durée dt comprenant une phase d'émission, suivie, avec optionnellement une période d'attente, d'une phase de réception, également appelée phase d'écoute.

Par exemple, la durée dt est de l'ordre de 10 à 40 millisecondes, et la période $\Delta T$ est de l'ordre de 5 secondes.

Par exemple, à la figure 2 on a représenté quelques intervalles de communication : $L_{1,1}$ pour le module communicant $M_1$ pendant la première période d'émission, $L_{1,2}$ pour le module communicant $M_1$ pendant la deuxième période d'émission, $L_{2,1}$ pour le module communicant $M_2$ pendant la première période d'émission, $L_{2,2}$ pour le module communicant $M_2$ pendant la première période d'émission et ainsi de suite.

Chaque intervalle de communication a un instant de début et un instant de fin, notés par exemple $t_{n,i}$ et $t_{n,f}$ pour le module communicant $M_n$.

Les intervalles de communication sont régulièrement répartis sur la période d'émission, et espacés temporellement pour diminuer le risque de collision. Les instants respectifs de début et de fin sont régulièrement répartis dans cet exemple.

La figure 3 illustre un chevauchement des intervalles de communication associés aux modules communicants respectifs $M_1$ et $M_2$. Un tel chevauchement est par exemple dû à une dérive des horloges internes des modules communicants et induit un risque important de collision ou interférence entre messages émis respectivement par le premier module communicant $M_1$ et par le deuxième module communicant $M_2$. Dans ce cas, au moins un des messages émis risque d'être corrompu et donc inutilisable.

Il est clair que plus le nombre total n de modules communicants augmente, plus le risque d'interférence est élevé.

Classiquement, le dispositif concentrateur C envoie, via l'unité d'émission/réception 12, un message d'acquittement (ACK) au module communicant émetteur en cas de réception de réception d'un message émis non corrompu.

Comme expliqué en introduction, de préférence, les périodes d'écoute des modules communicants sont limitées, pour éviter une consommation d'énergie trop importante.

En cas de non-réception d'un message d'acquittement relatif à un message émis, une méthode connue consiste à attendre un temps aléatoire et de renvoyer ce message. Les instants de début et de fin d'émission définissant les intervalles de communication des divers modules communicants ne sont plus périodiques dans le temps. Une telle méthode peut induire de nouvelles collisions, et ne permet pas de garantir le temps maximal d'attente avant un envoi de message réussi.

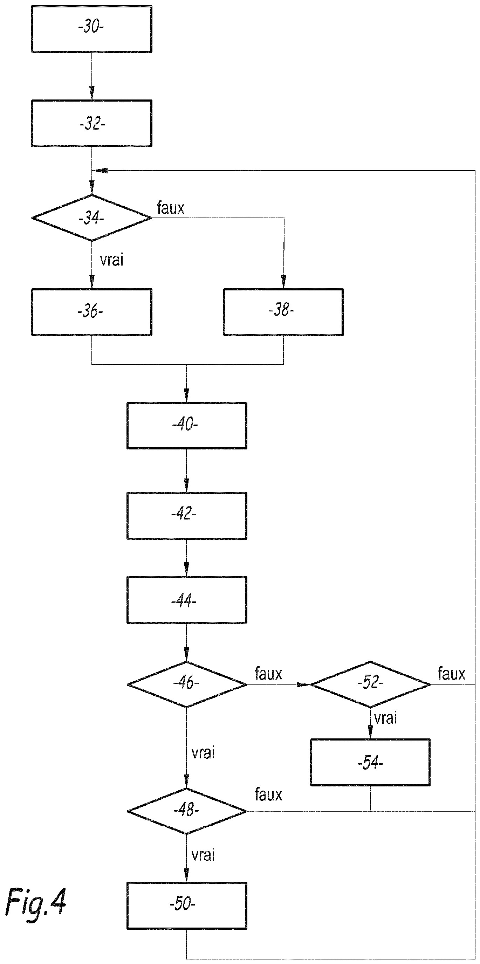

La figure 4 est un synoptique d'un mode de réalisation d'un procédé de communication radio dans un système comportant une pluralité de modules communicants dans un mode de réalisation.

Le procédé est mis en oeuvre par chacun des modules communicants $M_1$ à $M_n$ du système considéré.

Ce procédé permet de gérer la sélection des intervalles de communication pour diminuer le risque de collision, tout en garantissant qu'un module communicant envoie un message en un temps maximal donné.

Une première étape 30 consiste en l'alimentation en puissance électrique du module communicant $M_k$ courant mettant en oeuvre le procédé.

L'étape 30 est suivie d'une étape 32 d'initialisation d'un compteur, mis en oeuvre par une variable *Compteur,* à une valeur maximale prédéterminée MaxCnt, par exemple égale à 10. La valeur MaxCnt est ajustable à toute valeur entière positive, choisie pour que le système soit stable, par exemple en fonction d'un taux d'occupation par rapport au temps maximal de communication pour chaque module communicant.

La valeur MaxCnt est par exemple choisie en fonction du nombre n de modules communicants et de la durée $\Delta T$ d'une période de communication.

Lors d'une étape 34 de comparaison, la valeur de la variable *Compteur* est comparée à la valeur prédéterminée MaxCnt, et il est déterminé si la variable *Compteur* est différente de la valeur maximale prédéterminée MaxCnt.

En cas de différence, l'étape 34 de comparaison est suivie d'une étape 36 de mise à zéro d'une variable *Jitter* représentative du temps d'attente supplémentaire avant l'instant de début d'un prochain intervalle de communication associé au module communicant $M_k$ courant.

En cas d'égalité entre la valeur de la variable *Compteur* et de la valeur prédéterminée MaxCnt, l'étape 34 de comparaison est suivie d'une étape 38 à laquelle la variable *Jitter* représentative du temps d'attente supplémentaire avant l'instant de début d'un prochain intervalle de communication associé au module communicant $M_k$ courant est mise à une valeur aléatoire comprise entre 0 et $\Delta T$. Une loi de distribution aléatoire, par exemple une loi uniforme sur l'intervalle $[0, \Delta T]$ est appliquée.

Ensuite à l'étape 40 de détermination du temps d'attente $Att_k$, pour le module communicant courant, avant l'instant de début d'un prochain intervalle de communication, la formule de calcul suivante est appliquée :

$$Att_k = \Delta T + \textit{Jitter}$$

L'étape 40 de détermination du temps d'attente $Att_k$ est suivie d'une étape 42 d'attente effective, de durée égale au temps d'attente $Att_k$ déterminé.

Ensuite, le module communicant $M_k$ entre dans une phase 44 de communication en émission et en réception, pendant un intervalle temporel de communication de durée dt prédéterminée.

Par exemple, dans un mode de réalisation, le module communicant courant $M_k$ émet un message contenant des informations de mesures de courant et/ou de tension à destination du dispositif concentrateur, en communication point-à-point, en utilisant le protocole ZigBee Green Power, puis attend un message d'acquittement ACK en provenance du dispositif concentrateur.

Dans un fonctionnement nominal, pendant l'intervalle de temps de durée dt, le module communicant courant émet un message, attend et reçoit un message d'acquittement relatif au message émis.

Bien évidemment, il est possible d'envoyer plusieurs messages pendant l'intervalle temporel de communication prévu.

A l'étape suivante 46 de vérification d'acquittement il est vérifié si le message ou chaque message d'acquittement prévu a été reçu.

En cas de vérification positive, donc si la communication radio a fonctionné, l'étape 46 est suivie d'une étape 48 de comparaison permettant de vérifier si la valeur de la variable *Compteur* est supérieure à zéro.

Si la valeur de la variable *Compteur* est strictement supérieure à zéro, l'étape 48 est suivie d'une étape 50 de décrémentation de la variable *Compteur* d'une valeur de décrémentation entière *Dec* prédéterminée. Par exemple, la valeur *Dec* est égale à 1.

Après l'étape 50, le procédé retourne à l'étape 34 précédemment décrite.

Si la valeur de la variable *Compteur* est égale à 0, elle est laissée inchangée et l'étape 48 est suivie de l'étape 34 précédemment décrite.

En cas de vérification négative à l'étape 46 de vérification d'acquittement de réception, donc dans le cas de collision ou interférence, l'étape 46 est suivie d'une étape 52 de comparaison de la valeur de la variable *Compteur* à la valeur maximale MaxCnt prédéterminée, afin de déterminer si la valeur de la variable *Compteur* est strictement inférieure à MaxCnt.

Si la valeur de la variable *Compteur* est strictement inférieure à la valeur MaxCnt prédéterminée, alors l'étape de comparaison 52 est suivie d'une étape 54 d'incrémentation de la valeur de la variable *Compteur* d'une valeur d'incrémentation *Inc* prédéterminée. Par exemple, *Inc*=2.

De préférence, la valeur d'incrémentation *Inc* est différente de la valeur de décrémentation *Dec,* de manière à faire évoluer la valeur de la variable *Compteur* de manière dissymétrique en fonction de la réception ou non d'un message d'acquittement.

Avantageusement, cela permet d'éviter de rester dans des situations de collisions cycliques non continues, par exemple en cas de collision toutes les deux périodes.

Dans un mode de réalisation avantageux, la valeur d'incrémentation est supérieure à la valeur de décrémentation.

L'étape 54 est suivie de l'étape 34 précédemment décrite.

Si la valeur de la variable *Compteur* est égale à la valeur MaxCnt prédéterminée, alors l'étape 52 est suivie de l'étape 34 précédemment décrite. Ainsi, si le module communicant courant n'a pas reçu d'acquittement en réponse à l'envoi du premier message, la valeur de la variable *Compteur* reste inchangée.

En appliquant le procédé décrit ci-dessus, dès que la valeur de la variable *Compteur* est différente de la valeur maximale prédéterminée MaxCnt, le temps d'attente du module communicant courant est choisi égal à la période ΔT, sans ajout d'un temps d'attente aléatoire supplémentaire *Jitter.*

Avantageusement, le procédé décrit ci-dessus dans un de ses modes de réalisation permet d'initialiser un système comportant une pluralité de modules communicants dès leur installation, sans phase préalable de détermination des intervalles de communication associés à chacun des noeuds lors de la mise en service.

En effet, le procédé de communication proposé permet une convergence automatique, chaque module communicant étant adapté à trouver un intervalle temporel de communication sans collision.

Avantageusement, en cas de réception réussie, les intervalles temporels sont répétés périodiquement, le temps d'attente entre deux intervalles temporels étant égal à ΔT.

Afin d'améliorer encore la communication entre modules communicants, tout en limitant la durée d'écoute des messages d'acquittement sur chaque module communicant, il est proposé, dans un mode de réalisation, pour chaque module communicant alimenté électriquement par un réseau de fourniture d'énergie électrique, de cadencer l'émission des messages en fonction de la fréquence du courant alternatif fourni par ce réseau, afin de diminuer le risque de dérive temporelle.

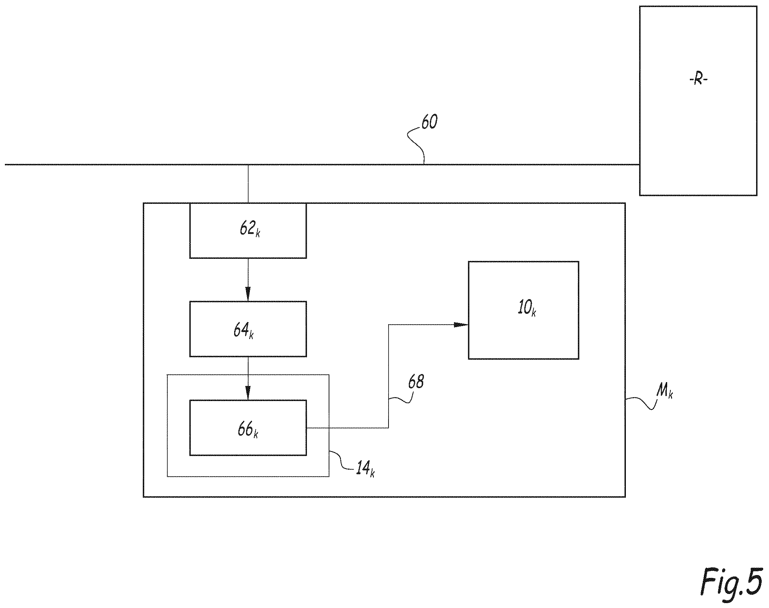

La figure 5 illustre schématiquement une partie d'un module communicant $M_k$ connecté via un bus de transmission 60 à un réseau d'alimentation en énergie électrique R, fournissant une tension alternative, sur un ou plusieurs conducteurs de phase. Le réseau d'alimentation est donc soit monophasé, soit triphasé.

Le module $M_k$ comporte une unité $62_k$ d'entrée de tension alternative fournie par le réseau, par exemple une tension à 50 Hz, et une unité $64_k$ de conversion analogique/numérique d'une seule phase du réseau d'alimentation.

Par exemple, lorsque le réseau d'alimentation est monophasé, la phase unique de tension est sélectionnée comme tension de référence.

Lorsque le réseau d'alimentation est triphasé comportant trois conducteurs de phase et un conducteur de neutre, la tension de la première phase, notée V1, est sélectionnée comme tension de référence. Alternativement, la tension de la deuxième ou de la troisième phase sont utilisées.

L'unité de conversion analogique/numérique $64_k$ fournit des échantillons numériques de tension V1 à une unité $66_k$ de détection de période de cadencement adaptée à réaliser des calculs et à envoyer une impulsion de cadencement 68 à l'unité d'émission/réception radio $10_k$.

Par exemple, une impulsion de cadencement 68 est émise toutes les 10 ms pour une fréquence de réseau d'alimentation de 50 Hz.

Une première valeur de seuil de tension supérieure $V_{max}$ et une deuxième valeur de seuil de tension inférieure $V_{min}$ sont fournies préalablement et mémorisées.

La première valeur de seuil de tension $V_{max}$ est

une valeur positive, et la deuxième valeur de seuil de tension $V_{min}$ est une valeur négative. Par exemple ces valeurs sont comprises entre -80V et +80V. Dans un mode de réalisation, $V_{min} = -V_{max}$.

Avantageusement, les mêmes valeurs de seuil de tension $V_{max}$ et $V_{min}$ sont mémorisées dans chacun des modules communicant $M_1$ à $M_n$ du système 1, afin d'assurer une synchronisation entre ces modules.

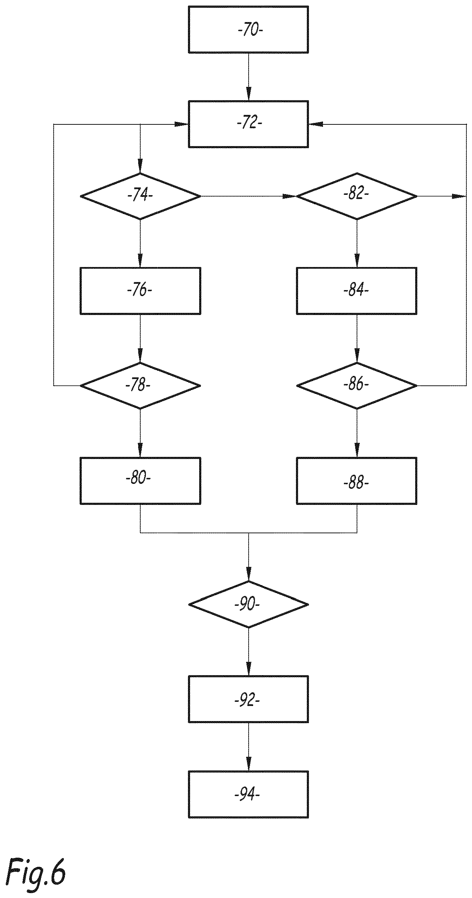

La figure 6 est un synoptique des principales étapes de calcul mises en oeuvre par l'unité de détection de période de cadencement dans un mode de réalisation.

Lors d'une première étape d'initialisation 70, un compteur de synchronisation CounterSync est initialisé à zéro, et deux variables booléennes d'état, appelées WasPositive et WasNegative sont initialisées à FAUX.

A l'étape 72 de réception d'échantillon de tension, une valeur de tension V est reçue.

La valeur de tension V est comparée à l'étape de comparaison 74 à la première valeur de seuil de tension supérieure $V_{max}$. Si V est supérieure à $V_{max}$, l'étape 74 est suivie d'une étape 76 à laquelle la variable booléenne WasPositive est mise à VRAI.

L'étape 76 est suivie d'une étape 78 à laquelle il est vérifié si la variable booléenne WasNegative est égale à VRAI. En cas de comparaison positive à l'étape 78, cette étape est suivie d'une étape 80 à laquelle la variable booléenne WasNegative est mise à FAUX et le compteur de synchronisation CounterSync est augmenté de 1.

En cas de comparaison négative à l'étape 78, cette étape est suivie de l'étape 72 préalablement décrite.

Si la valeur de tension V est inférieure à $V_{max}$, l'étape 74 est suivie d'une étape 82 de comparaison de la tension V à la deuxième valeur de seuil de tension inférieure $V_{min}$.

Si V est supérieure à $V_{min}$, l'étape 82 est suivie de l'étape 72 précédemment décrite.

Si V est inférieure à $V_{min}$, l'étape 82 est suivie d'une étape 84 à laquelle la variable booléenne WasNegative est mise à VRAI.

L'étape 84 est suivie d'une étape 86 à laquelle il est vérifié si la variable booléenne WasPositive est égale à VRAI. En cas de comparaison positive à l'étape 86, cette étape est suivie d'une étape 88 à laquelle la variable booléenne WasPositive est mise à FAUX et le compteur de synchronisation CounterSync est augmenté de 1.

En cas de comparaison négative à l'étape 86, cette étape est suivie de l'étape 72 préalablement décrite.

Les étapes respectives 80 et 88 sont suivies d'une comparaison 90 du compteur de synchronisation à une valeur de compteur de période de cadencement CP représentative d'un nombre de changements de valeurs d'états par rapport aux valeurs de seuil de tension supérieure et inférieure définissant une période d'émission.

La valeur de compteur de période de cadencement est prédéterminée, par exemple supérieure à 10 de préférence égale à 500.

Si à l'étape de comparaison 90, le compteur de synchronisation est supérieur ou égal à la valeur de compteur de période de cadencement CP, une impulsion de cadencement est émise à l'étape 92, et le compteur de synchronisation est remis à zéro à l'étape 94. Sinon, l'étape 90 est suivie de l'étape 72 précédemment décrite.

L'étape 94 est suivie de l'étape 72 précédemment décrite.

Bien évidemment, diverses variantes d'implémentation d'une unité de détection de période de cadencement sont envisageables.

Il est à noter que le procédé de synchronisation décrit en référence à la figure 6 s'applique pour limiter la dérive d'horloge temporelle, et permet d'améliorer le réseau de communication formé le dispositif concentrateur et les modules communicants. L'amélioration est effective quelle que soit la méthode de sélection d'intervalles temporels de communication associés à chaque module communicant.

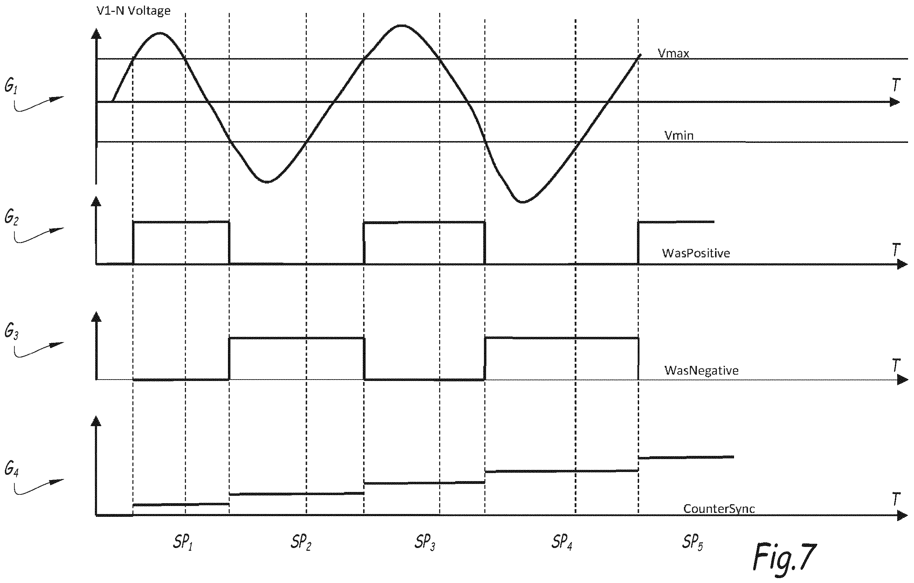

La figure 7 illustre schématiquement l'évolution de la tension sélectionnée en fonction du temps dans un premier graphe $G_1$, ainsi que la première valeur de seuil de tension $V_{max}$ et la deuxième valeur de seuil de tension $V_{min}$.

En dessous du graphe $G_1$ sont représentées deux graphes $G_2$ et $G_3$ représentatifs des valeurs des variables booléennes WasPositive et WasNegative en fonction du temps, sur plusieurs sous-périodes temporelles.

Enfin un dernier graphe $G_4$ représente la valeur du compteur de synchronisation CounterSync correspondant à chaque sous-période.

Les graphes $G_1$ à $G_4$ sont alignés par rapport à l'axe des abscisses (axe temporel) qui comporte, dans l'exemple de la figure 7, cinq sous-périodes $SP_1$ à $SP_5$, le compteur de synchronisation étant augmenté à chacune des sous-périodes, chaque sous-période correspondant à un changement d'état du signal de tension par rapport aux valeurs de seuil de tension $V_{max}$ et $V_{min}$.

Avantageusement, chaque module communicant met en oeuvre une telle unité de détection de période de cadencement basée sur une même valeur de tension obtenue du réseau d'alimentation, ce qui permet de synchroniser les modules communicants et de limiter la dérive d'horloge.

De plus, avantageusement, la mise en oeuvre d'une telle unité, pour chaque module communicant alimenté en électricité par le réseau de distribution, permet de conserver la synchronisation des modules communicants même en cas d'arrêt du dispositif concentrateur.

Cependant, dans certaines installations, tous ou partie des modules communicants ne sont pas alimentés par le réseau d'alimentation électrique, mais ces modules comprennent une alimentation autonome.

Dans ce cas, en alternative, il est envisagé d'envoyer des informations de synchronisation ou de re-synchronisation aux modules communicants connectés à partir du dispositif concentrateur.

Dans ce mode de réalisation alternatif, le dispositif concentrateur utilise la communication bidirectionnelle avec chacun des modules communicants.

Le dispositif concentrateur utilise sa propre horloge interne, ou une horloge externe pour calculer, à la réception d'un message en provenance d'un module communicant $M_k$ donné, un décalage temporel $\Delta t$, positif ou négatif, à appliquer par le module communicant $M_k$ lors d'une émission suivante.

Le décalage temporel, avec un signe associé pour indiquer s'il s'agit d'une avance ou d'un retard, est envoyé par le dispositif concentrateur au module communicant, de préférence dans le message contenant l'acquittement ACK de réception.

Le module communicant $M_k$ destinataire est alors en mesure d'extraire cette information de décalage temporel du message reçu et de la mémoriser pour appliquer le décalage temporel indiqué lors d'une émission suivante.

Il s'agit d'un procédé de synchronisation maître-esclave dans un réseau à topologie en étoile, le dispositif maître étant le dispositif concentrateur.

En outre, le dispositif concentrateur peut, par ce même procédé d'envoi de décalage temporel $\Delta t$ à appliquer, envoyer des instructions pour ré-agencer l'ordre des intervalles temporels de communication associés aux modules communicants, de manière à regrouper temporellement des émissions d'informations de mesure corrélées. Par exemple, dans une application, il est intéressant de regrouper une information de courant transmise par un premier module et une information de température transmise par un deuxième module, les mesures correspondantes étant effectuées sensiblement en même temps, de manière à obtenir à quelques millisecondes d'intervalle ces informations qui sont corrélées.

Dans un autre mode de réalisation, certains des modules communicants d'un système de communication sont alimentés par des sources autonomes d'énergie, et d'autres modules sont alimentés par un réseau d'alimentation en énergie électrique. Dans ce mode de réalisation, les divers modes de réalisation décrits ci-dessus sont combinés, afin de permettre à chaque module communicant de déterminer les intervalles de communication optimisés pour éviter des éventuelles collisions ou interférences.

## Revendications

**1.** Procédé de communication radio dans un système comportant une pluralité de modules communicants $(M_1,...,M_n)$, chaque module communicant $(M_1,...,M_n)$ étant apte à obtenir au moins une valeur physique mesurée et à transmettre un message encapsulant ladite au moins une valeur physique mesurée à un dispositif concentrateur (C) selon un protocole de communication radio donné, l'émission du message étant effectuée pendant un intervalle temporel de communication, défini par un instant de début et un instant de fin, un temps d'attente séparant deux intervalles temporels de communication successifs d'un même module communicant $(M_1,...,M_n)$,

chaque module communicant $(M_1,..., M_n)$ de la pluralité de modules communicants calcule (40) le temps d'attente séparant deux intervalles temporels de communication successifs dudit module communicant en fonction d'un compteur, ledit compteur prenant une valeur initiale égale à une valeur maximale prédéterminée, suite à une émission de message et à une réception d'un message d'acquittement, correspondant au message émis par ledit module communicant, en provenance du dispositif concentrateur (C), lorsque la valeur du compteur est strictement positive, la valeur du compteur est décrémentée (50) d'une valeur de décrémentation prédéterminée, le temps d'attente calculé (36, 38, 40) étant égal soit à une durée de période de communication prédéterminée si la valeur du compteur est différente de la valeur maximale prédéterminée, soit à ladite durée de période de communication augmentée d'une durée supplémentaire aléatoire si la valeur du compteur est égale de la valeur maximale prédéterminée.

**2.** Procédé de communication selon la revendication 1, dans lequel, suite à une émission de message et en l'absence de réception d'un message d'acquittement en provenance du dispositif concentrateur (C) pendant un intervalle de communication, si la valeur du compteur est strictement inférieure à la valeur maximale prédéterminée, la valeur du compteur est incrémentée (54) d'une valeur d'incrémentation prédéterminée.

**3.** Procédé de communication selon la revendication 2, dans lequel la valeur de décrémentation est différente de la valeur d'incrémentation.

**4.** Procédé de communication selon la revendication 1, comprenant, suite à une émission de message et à une réception, par un module communicant $(M_1,...,M_n)$, d'un message d'acquittement correspondant en provenance du dispositif concentrateur (C), une étape, mise en oeuvre par ledit module communicant $(M_1,...,M_n)$ récepteur, d'extraction du message d'acquittement d'une valeur de décalage temporel $\Delta t$, positif ou négatif, à appliquer lors d'une émission suivante.

**5.** Procédé de communication selon l'une quelconque des revendications 1 à 4, mis en oeuvre par chaque

module communicant ($M_k$) alimenté par un réseau (R) de distribution de tension électrique alternative de fréquence donnée, comportant en outre une étape de détection de période de cadencement en fonction de ladite fréquence.

6. Procédé de communication selon la revendication 5, comportant la réception (72) de valeurs de tension d'alimentation, et pour chaque valeur de tension, lorsque ladite valeur est supérieure à une première valeur ($V_{max}$) de seuil de tension prédéterminée ou inférieure à une deuxième valeur ($V_{min}$) de seuil de tension prédéterminée, l'augmentation (80, 82) d'un compteur de synchronisation.

7. Procédé de communication selon la revendication 6, dans lequel lorsque le compteur de synchronisation atteint une valeur de compteur de période de cadencement prédéterminée, une impulsion de cadencement est émise (92), ladite impulsion de cadencement servant à déterminer l'instant de début d'intervalle temporel de communication du module communicant ($M_1,..., M_n$).

8. Programme d'ordinateur comportant des instructions pour mettre en oeuvre les étapes d'un procédé de communication radio dans un système comportant une pluralité de modules communicants conforme aux revendications 1 à 7 lors de l'exécution du programme par un processeur d'un dispositif programmable d'un module communicant.

9. Système de communication radio comportant une pluralité de modules communicants ($M_1,...,M_n$) et un dispositif concentrateur (C), chaque module communicant ($M_1,...,M_n$) étant apte à obtenir au moins une valeur physique mesurée et à transmettre un message encapsulant ladite au moins une valeur physique mesurée au dispositif concentrateur (C) selon un protocole de communication radio donné, l'émission du message étant effectuée pendant un intervalle temporel de communication, défini par un instant de début et un instant de fin, un temps d'attente séparant deux intervalles temporels de communication successifs d'un même module communicant ($M_1,..., M_n$),

chaque module communicant ($M_1,..., M_n$) de la pluralité de modules communicants comporte une unité adaptée à calculer le temps d'attente séparant deux intervalles temporels de communication successifs dudit module communicant en fonction d'un compteur, ledit compteur prenant une valeur initiale égale à une valeur maximale prédéterminée,

le module communicant étant configuré pour, suite à une émission de message et à une réception d'un message d'acquittement correspondant au message émis par ledit module communicant, en provenance du dispositif concentrateur (C), lorsque la valeur du compteur est strictement positive, décrémenter la valeur du compteur (50) d'une valeur de décrémentation prédéterminée,

le temps d'attente étant égal soit à la durée de période de communication prédéterminée si la valeur du compteur est différente de ladite valeur maximale prédéterminée, soit à ladite durée de période de communication augmentée d'une durée supplémentaire aléatoire si la valeur du compteur est égale de la valeur maximale prédéterminée.

10. Système de communication selon la revendication 9, dans lequel, chaque module communicant est configuré pour, suite à une émission de message et en l'absence de réception d'un message d'acquittement en provenance du dispositif concentrateur (C) pendant un intervalle de communication, si la valeur du compteur est strictement inférieure à la valeur maximale prédéterminée, incrémenter la valeur du compteur d'une valeur d'incrémentation prédéterminée.

11. Système de communication selon la revendication 9 ou 10, dans lequel chaque module communicant ($M_1,..., M_n$) est un module de mesure de valeurs électriques d'une installation électrique.

12. Système de communication selon l'une des revendications 9 à 11, dans lequel au moins un module communicant ($M_k$) est alimenté par un réseau de distribution de tension électrique alternative de fréquence donnée, et dans lequel chaque module communicant ($M_k$) alimenté par le réseau de distribution met en oeuvre une détection de période de cadencement en fonction de ladite fréquence et une détermination d'un instant de début d'intervalle temporel de communication en fonction de ladite période de cadencement.

13. Système de communication selon l'une des revendications 9 à 11, dans lequel au moins un module communicant ($M_1,..., M_n$) est adapté à recevoir un message d'acquittement en provenance du dispositif concentrateur (C) et à extraire du message d'acquittement une valeur de décalage temporel $\Delta t$, positif ou négatif, à appliquer lors d'une émission suivante par ledit module communicant ($M_1,..., M_n$).

**Patentansprüche**

1. Funkkommunikationsverfahren in einem System, das eine Vielzahl von kommunizierenden Modulen ($M_1,...,M_n$) umfasst, wobei jedes kommunizierende

Modul ($M_1$,...,$M_n$) ausgelegt ist, um mindestens einen gemessenen physischen Wert zu erzielen und eine Meldung, die den mindestens einen gemessenen physischen Wert einkapselt, an eine Konzentrationsvorrichtung (C) gemäß einem gegebenen Funkkommunikationsprotokoll zu übertragen, wobei die Emission der Meldung während eines zeitlichen Kommunikationsintervalls durchgeführt wird, das von einem Anfangszeitpunkt und einem Endzeitpunkt definiert ist, wobei eine Wartezeit zwei aufeinanderfolgende zeitliche Kommunikationsintervalle eines gleichen kommunizierenden Moduls ($M_1$,...,$M_n$) trennt,

wobei jedes kommunizierende Modul ($M_1$,...,$M_n$) der Vielzahl von kommunizierenden Modulen die Wartezeit, die zwei aufeinanderfolgende zeitliche Kommunikationsintervalle des kommunizierenden Moduls trennt, in Funktion eines Zählers berechnet (40), wobei der Zähler einen anfänglichen Wert, der gleich einem vorbestimmten maximalen Wert ist,
nach einer Meldungsemission und einem Empfang einer Störungsmeldung verwendet, die einer Meldung, emittiert durch das kommunizierende Modul, entspricht, die aus der Konzentrationsvorrichtung stammt (C), wenn der Wert des Zählers streng positiv ist, wird der Wert des Zählers (50) um einen vorbestimmten Dekrementierungswert dekrementiert,
wobei die berechnete Wartezeit (36, 38, 40) entweder gleich einer vorbestimmten Dauer eines Kommunikationszeitraums, wenn der Wert des Zählers verschieden vom vorbestimmten maximalen Wert ist, oder der Dauer des Kommunikationszeitraums, erhöht um eine zusätzliche zufällige Dauer ist, wenn der Wert des Zählers gleich dem vorbestimmten maximalen Wert ist.

2. Kommunikationsverfahren nach Anspruch 1, wobei nach einer Meldungsemission und bei Abwesenheit des Empfangs einer Störungsmeldung, die aus der Konzentrationsvorrichtung stammt (C), während eines Kommunikationsintervalls, wenn der Wert des Zählers streng kleiner als der vorbestimmte maximale Wert ist, der Wert des Zählers um einen vorbestimmten Erhöhungswert erhöht wird.

3. Kommunikationsverfahren nach Anspruch 2, wobei der Dekrementierungswert verschieden vom Inkrementierungswert ist.

4. Kommunikationsverfahren nach Anspruch 1, umfassend, nach einer Meldungsemission und eines Empfangs, durch ein kommunizierendes Modul ($M_1$,...,$M_n$), einer entsprechenden Störungsmeldung, die aus der Konzentrationsvorrichtung stammt (C), einen Schritt, durchgeführt durch das empfangende kommunizierende Modul ($M_1$,...,$M_n$), des Extrahierens der Störungsmeldung um einen zeitlichen Versatzwert $\Delta t$, positiv oder negativ, der bei einer folgenden Emission angewendet werden muss.

5. Kommunikationsverfahren nach einem der Ansprüche 1 bis 4, durchgeführt von jedem kommunizierenden Modul ($M_k$), das von einem Verteilernetz (R) von elektrischer Wechselspannung mit einer gegebenen Frequenz versorgt wird, umfassend außerdem einen Schritt des Nachweises der Taktperiode in Funktion der Frequenz.

6. Kommunikationsverfahren nach Anspruch 5, umfassend den Empfang (72) von Werten der Versorgungsspannung und, für jeden Spannungswert, wenn der Wert höher als ein erster Wert ($V_{max}$) der vorbestimmten Spannungsschwelle oder kleiner als ein zweiter Wert ($V_{min}$) der vorbestimmten Spannungsschwelle ist, die Erhöhung (80, 82) eines Synchronisationszählers.

7. Kommunikationsverfahren nach Anspruch 6, wobei wenn der Synchronisationszähler einen Zählwert mit einer vorbestimmten Taktperiode erreicht, ein Taktimpuls (92) emittiert wird, wobei der Taktimpuls dazu dient, den Anfangszeitpunkt des zeitlichen Intervalls der Kommunikation des kommunizierenden Moduls ($M_1$,...,$M_n$) zu bestimmen.

8. Computerprogramm, umfassend Anweisungen, um die Schritte eines Funkkommunikationsverfahrens in einem System, umfassend eine Vielzahl von kommunizierenden Modulen nach Anspruch 1 bis 7, bei der Ausführung des Programms durch einen Prozessor einer programmierbaren Vorrichtung eines kommunizierenden Moduls durchzuführen.

9. Funkkommunikationssystem, umfassend eine Vielzahl von kommunizierenden Modulen ($M_1$,...,$M_n$) und eine Konzentrationsvorrichtung (C), wobei jedes kommunizierende Modul ($M_1$,...,$M_n$) ausgelegt ist, um mindestens einen gemessenen physischen Wert zu erhalten, und um eine Meldung, die den mindestens einen gemessenen physischen Wert einkapselt, an die Konzentrationsvorrichtung (C) gemäß einem gegebenen Funkkommunikationsprotokoll zu übertragen, wobei die Emission der Meldung während eines zeitlichen Kommunikationsintervalls durchgeführt wird, das durch einen Anfangszeitpunkt und einem Endzeitpunkt definiert ist, wobei eine Wartezeit zwei aufeinanderfolgende zeitliche Kommunikationsintervalle eines gleichen kommunizierenden Moduls ($M_1$,...,$M_n$) trennt,

wobei jedes kommunizierende Modul ($M_1$,...,$M_n$) der Vielzahl von kommunizierenden Modulen eine Einheit umfasst, die ausgelegt ist, um die Wartezeit, die zwei aufeinanderfolgende zeitliche Kommunikationsintervalle des kommunizierenden Moduls trennt, in Funktion eines Zählers zu berechnen, wobei der Zähler einen anfänglichen Wert verwendet, der gleich einem vorbestimmten maximalen Wert ist,

wobei das kommunizierende Modul konfiguriert ist, um, infolge einer Meldungsemission und eines Empfangs einer Störungsmeldung, die einer Meldung, ausgegeben durch das kommunizierende Modul, entspricht, die aus der Konzentrationsvorrichtung stammt (C), wenn der Wert des Zählers streng positiv ist, den Wert des Zählers (50) um einen vorbestimmten Dekrementierungswert zu dekrementieren,

wobei die Wartezeit entweder gleich der vorbestimmten Dauer eines Kommunikationszeitraums, wenn der Wert des Zählers verschieden vom vorbestimmten maximalen Wert ist, oder der Dauer des Kommunikationszeitraums, erhöht um eine zusätzliche zufällige Dauer ist, wenn der Wert des Zählers gleich dem vorbestimmten maximalen Wert ist.

10. Kommunikationssystem nach Anspruch 9, wobei jedes kommunizierende Modul konfiguriert ist, um nach einer Meldungsemission und bei Abwesenheit des Empfangs einer Störungsmeldung, die aus der Konzentrationsvorrichtung stammt (C), während eines Kommunikationsintervalls, wenn der Wert des Zählers streng kleiner als der vorbestimmte maximalen Wert ist, den Wert des Zählers um einen vorbestimmten Erhöhungswert zu erhöhen.

11. Kommunikationssystem nach Anspruch 9 oder 10, wobei jedes kommunizierende Modul ($M_1$,...,$M_n$) ein Modul zum Messen von elektrischen Werten einer elektrischen Installation ist.

12. Kommunikationssystem nach einem der Ansprüche 9 bis 11, wobei mindestens ein kommunizierendes Modul ($M_k$) von einem Verteilernetz von elektrischer Wechselspannung mit einer gegebenen Frequenz versorgt wird, und wobei jedes kommunizierende Modul ($M_k$), versorgt vom Verteilernetz, einen Nachweis der Taktperiode in Funktion der Frequenz und eine Bestimmung des Anfangszeitpunkts des zeitlichen Kommunikationsintervalls in Funktion der Taktperiode durchführt.

13. Kommunikationssystem nach einem der Ansprüche 9 bis 11, wobei mindestens ein kommunizierendes Modul ($M_1$,...,$M_n$) ausgelegt ist, um eine Störungsmeldung, die aus der Konzentrationsvorrichtung stammt (C), zu empfangen, und aus der Störungsmeldung einen zeitlichen Versatzwert $\Delta t$, positiv oder negativ, zu extrahieren, der bei einer folgenden Emission durch das kommunizierende Modul

($M_1$,...,$M_n$) angewendet werden muss.

## Claims

1. A method of radio communication in a system comprising a plurality of communicating modules ($M_1$, ..., $M_n$),each communicating module ($M_1$, ..., $M_n$) being able to obtain at least one measured physical value and to transmit a message encapsulating said at least one measured physical value to a hub device (C) according to a given radio communication protocol, the sending of the message being performed during a communication time interval, defined by a start instant and an end instant, a waiting time separating two successive communication time intervals of one and the same communicating module ($M_1$, ..., $M_n$),

   each communicating module ($M_1$, ..., $M_n$) of the plurality of communicating modules calculates (40) the waiting time separating two successive communication time intervals of said communicating module as a function of a counter, said counter taking an initial value equal to a predetermined maximum value, subsequent to a message send and to a receipt of an acknowledgement message, corresponding to the message transmitted by said communicating module, originating from the hub device (C), when the value of the counter is strictly positive, the value of the counter (50) is decremented by a predetermined decrementation value, the calculated waiting time (36, 38, 40) being equal either to a predetermined communication period duration if the value of the counter is different from the predetermined maximum value, or to said communication period duration increased by a random additional duration if the value of the counter is equal to the predetermined maximum value.

2. The method of communication according to claim 1, wherein, subsequent to a message send and in the absence of receipt of an acknowledgement message originating from the hub device (C) during a communication interval, if the value of the counter is strictly less than the predetermined maximum value, the value of the counter is incremented (54) by a predetermined incrementation value.

3. The method of communication according to claim 2, wherein the decrementation value is different from the incrementation value.

4. The method of communication according to claim 1, comprising, subsequent to a message send and to a receipt, by a communicating module ($M_1$, ..., $M_n$),

of a corresponding acknowledgement message originating from the hub device (C), a step, implemented by said receiver communicating module ($M_1$, ..., $M_n$), of extracting from the acknowledgement message a temporal shift value $\Delta t$, positive or negative, to be applied during a following send.

5. The method of communication according to any one of claims 1 to 4, implemented by each communicating module ($M_k$) supplied by an AC electrical voltage distribution network (R) of given frequency, furthermore comprising a step of detecting timing period as a function of said frequency.

6. The method of communication according to claim 5, comprising the reception (72) of supply voltage values, and for each voltage value, when said value is greater than a first predetermined voltage threshold value ($V_{max}$) or less than a second predetermined voltage threshold value ($V_{min}$), increasing (80, 82) a synchronization counter.

7. The method of communication according to claim 6, wherein when the synchronization counter reaches a predetermined timing period counter value, a timing pulse is sent (92), said timing pulse serving to determine the communication time interval start instant of the communicating module ($M_1$, ..., $M_n$).

8. A computer program comprising instructions for implementing the steps of a method of radio communication in a system comprising a plurality of communicating modules according to claims 1 to 7 upon the running of the program by a processor of a programmable device of a communicating module.

9. A radio communication system comprising a plurality of communicating modules ($M_1$, ..., $M_n$) and a hub device (C), each communicating module ($M_1$, ..., $M_n$) being able to obtain at least one measured physical value and to transmit a message encapsulating said at least one measured physical value to the hub device (C) according to a given radio communication protocol, the sending of the message being performed during a communication time interval, defined by a start instant and an end instant, a waiting time separating two successive communication time intervals of one and the same communicating module ($M_1$, ..., $M_n$),

each communicating module ($M_1$, ..., $M_n$) of the plurality of communicating modules comprises a unit adapted to calculate the waiting time separating two successive communication time intervals of said communicating module as a function of a counter, said counter taking an initial value equal to a predetermined maximum value, the communicating module being configured, subsequent to a message send and to a receipt of an acknowledgement message, corresponding to the message transmitted by said communicating module, originating from the hub device (C), when the value of the counter is strictly positive, to decrement the value of the counter (50) by a predetermined decrementation value, the waiting time being equal either to the predetermined communication period duration if the value of the counter is different from said predetermined maximum value, or to said communication period duration increased by a random additional duration if the value of the counter is equal to the predetermined maximum value.

10. The communication system according to claim 9, wherein each communicating module is configured, subsequent to a message send and in the absence of receipt of an acknowledgement message originating from the hub device (C) during a communication interval, if the value of the counter is strictly less than the predetermined maximum value, to increment the value of the counter by a predetermined incrementation value.

11. The communication system according to claim 9 or 10, wherein each communicating module ($M_1$, ..., $M_n$) is a module for measuring electrical values of an electrical installation.

12. The communication system according to one of claims 9 to 11, wherein at least one communicating module ($M_k$) is supplied by an AC electrical voltage distribution network of given frequency, and wherein each communicating module ($M_k$) supplied by the distribution network implements a detection of timing period as a function of said frequency and a determination of a communication time interval start instant as a function of said timing period.

13. The communication system according to one of claims 9 to 11, wherein at least one communicating module ($M_1$, ..., $M_n$) is adapted to receive an acknowledgement message originating from the hub device (C) and to extract from the acknowledgement message a temporal shift value $\Delta t$, positive or negative, to be applied during a following send by said communicating module ($M_1$, ..., $M_n$).

*Fig.1*

Fig.2

Fig.3

Fig.4

Fig.5

Fig.6

Fig.7

**RÉFÉRENCES CITÉES DANS LA DESCRIPTION**

**Documents brevets cités dans la description**

- US 2013049939 A1

- US 2011087396 A1